(19) Europäisches Patentamt / European Patent Office / Office européen des brevets

(11) **EP 3 299 762 B1**

(12) **FASCICULE DE BREVET EUROPEEN**

(45) Date de publication et mention
de la délivrance du brevet:
**26.07.2023 Bulletin 2023/30**

(21) Numéro de dépôt: **17192529.0**

(22) Date de dépôt: **22.09.2017**

(51) Classification Internationale des Brevets (IPC):
**G01M 5/00** *(2006.01)* **G01B 21/32** *(2006.01)*

(52) Classification Coopérative des Brevets (CPC):
**G01B 21/32; G01M 5/0025; G01M 5/0058;
G01M 5/0091**

(54) **ÉLÉMENT DE STRUCTURE EN BETON INSTRUMENTÉ**

INSTRUMENTIERTES STRUKTURELEMENT AUS BETON

STRUCTURE ELEMENT MADE OF INSTRUMENTED CONCRETE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.09.2016 FR 1659035**

(43) Date de publication de la demande:
**28.03.2018 Bulletin 2018/13**

(73) Titulaires:
• **COMMISSARIAT À L'ÉNERGIE ATOMIQUE ET AUX
ÉNERGIES ALTERNATIVES
75015 Paris (FR)**
• **Consolis
92400 Courbevoie (FR)**

(72) Inventeurs:
• **CARMONA, Mikaël
38570 TENCIN (FR)**
• **JOUANET, Laurent
38880 AUTRANS (FR)**
• **CAMUEL, Tony
78600 MAISONS LAFFITTE (FR)**

(74) Mandataire: **INNOV-GROUP
310, avenue Berthelot
69372 Lyon Cedex 08 (FR)**

(56) Documents cités:
CN-A- 105 910 779    DE-U1-202016 004 348
US-A1- 2002 057 097    US-A1- 2014 012 517
US-B1- 6 292 108

**Description**

L'invention concerne le domaine du bâtiment et travaux publics, et en particulier le suivi de la déformation d'éléments de structure en béton au cours de leur cycle de vie.

Le suivi de l'état de santé de structures en béton connaît une forte expansion, par exemple pour anticiper une défaillance de la structure, pour suivre l'évolution de sa déformation, ou pour mettre en oeuvre des modifications préventives. Des éléments de structure en béton tels que des poutres, des murs de soutènement, ou des caissons enterrés sont notamment de plus en plus fréquemment équipés pour réaliser un suivi de leur état de santé.

La déformée globale d'un élément de structure tel qu'une poutre est un paramètre géométrique statique lié à l'application d'une charge statique telle que la pesanteur, ou quasi statique telle que le trafic routier sur un pont par exemple, par opposition par exemple à un phénomène vibratoire ou propagé. Le suivi de la déformée d'un élément de structure s'effectue sur une période de plusieurs années, son évolution étant lente et d'amplitude relativement faible de par la conception de l'élément de structure. Étant donnée l'amplitude faible des variations de la déformée, le suivi de cette déformée nécessite une très grande précision, typiquement de 1 mm pour 10 m.

Un produit, présenté en 2014 sous la référence commerciale Smart Sleeper, est destiné à déterminer les déformations locales c'est-à-dire des déformations de l'ordre de quelques micromètres par mètre. A partir de ces déformations locales, sont déduits les moments en flexion d'une traverse de voie de chemin de fer en béton. Ce produit a notamment fait l'objet d'une présentation par Mrs. Loaëc et al, lors du congrès Transport Research Arena tenu à Paris en 2014.

Le document US2002/0057097 décrit un système de suivi d'altération des matériaux dans une structure. Le système comprend des capteurs intégrés dans la structure avec des électrodes en contact avec le matériau environnant. Les signaux des capteurs sont numérisés en local puis transmis à un ordinateur pour affichage.

Le document US2014/0012517 décrit des capteurs d'attitude fixés en surface de poutres. En fonction des mesures de ces capteurs, une déformée de poutre est calculée en fonction des mesures des capteurs d'attitude.

Ce produit inclut notamment des sondes enrobées par le béton lors de la fabrication des traverses de chemin de fer. Chaque sonde comprend un extensomètre basé sur une fibre optique à réseaux de Bragg. L'extensomètre inclut deux plaques métalliques distantes de 110 mm, positionnées dans une position perpendiculaire par rapport à l'axe de la traverse à fabriquer. Un tube parallèle à l'axe de la traverse relie les deux plaques. Une fibre optique traverse le tube. Cette fibre optique comporte un réseau de Bragg, positionné à l'intérieur du tube. La fibre est fixée à chacune des plaques. Ainsi, la fibre entre les deux plaques subit la même déformation que le béton environnant. Un circuit optique est connecté à une extrémité de la fibre, pour y injecter un signal lumineux et mesurer le signal lumineux réfléchi par le réseau de Bragg. Le signal lumineux réfléchi est fonction du réseau de Bragg formé dans la fibre, et de la contrainte en traction/compression appliquée à ce réseau de Bragg. Une même fibre optique est typiquement utilisée pour former plusieurs sondes au moyen de réseaux de Bragg implantés à différents emplacements le long de cette fibre.

De telles sondes doivent de préférence être placées le plus loin possible de la fibre neutre de la traverse, afin de mesurer une amplitude de déformation maximale et ainsi présenter une précision de mesure maximale. Plus la sonde est éloignée de la fibre neutre, plus elle est proche de la surface de la traverse en béton. La sonde est alors plus exposée à des risques de détérioration ou à des perturbations extérieures. Par ailleurs, la fibre optique à réseau de Bragg est très sensible à la température et à son mode d'intégration dans l'élément de structure.

La proximité d'un capteur de la surface de la traverse en béton peut également présenter un caractère intrusif du fait de sa localisation dans une zone plus fortement sollicitée en contraintes, induisant une réduction de performance du produit béton et une fragilisation de la traverse. En outre, ce produit ne permet de mesurer que des déformations locales du produit béton.

L'invention vise à résoudre un ou plusieurs de ces inconvénients. L'invention porte ainsi sur un élément de structure béton, tel que défini dans la revendication 1 annexée.

L'invention porte également sur les variantes des revendications dépendantes. L'homme du métier comprendra que chacune des caractéristiques des variantes des revendications dépendantes peut être combinée indépendamment aux caractéristiques de la revendication 1, sans pour autant constituer une généralisation intermédiaire.

L'invention porte également sur une structure, comprenant :

- plusieurs éléments de structure tels que mentionnés ci-dessus ;
- un circuit de traitement configuré pour calculer une déformée globale à partir de la déformée calculée pour chacun desdits éléments de structure.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue en coupe longitudinale de côté d'un exemple d'élément de structure en béton selon un mode de réalisation de l'invention ;
- la figure 2 est une vue de côté d'un exemple de capteur d'attitude positionné dans l'élément de structure ;
- la figure 3 est une vue en coupe longitudinale de côté du capteur d'attitude de la figure 2 ;
- la figure 4 est une vue en coupe longitudinale de dessus du capteur d'attitude de la figure 2 ;
- la figure 5 est une vue en perspective du capteur d'attitude la figure 2 ;
- la figure 6 est une vue en coupe de côté d'une étape d'un exemple de procédé de fabrication d'un élément de structure selon l'invention ;
- la figure 7 est une vue en perspective d'un exemple de structure complète comprenant plusieurs éléments de structure selon l'invention.

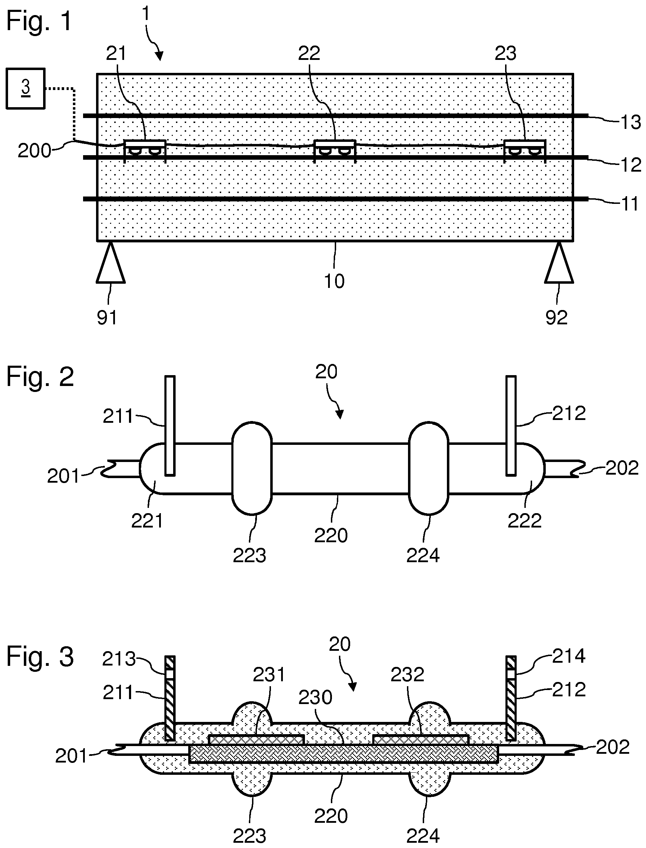

La figure 1 est une vue en coupe longitudinale de côté d'un exemple d'élément de structure en béton 1 selon un mode de réalisation de l'invention. L'élément de structure 1 comprend d'une part une matrice en béton 10, et une structure de renfort en acier noyé dans la matrice en béton 10. La structure de renfort en acier peut avantageusement être contrainte en traction, de façon connue en soi, avec la technologie béton pré-contraint ou post-contraint. De même la structure de renfort en acier, noyée dans la matrice en béton 10, peut être dimensionnée suivant les règles de construction du béton armé avec l'emploi de barres d'acier longitudinales La structure de renfort en acier comporte ici plusieurs barres d'acier 11 à 13, noyées dans la matrice 10. Les barres d'acier 11 à 13 s'étendent ici selon une direction longitudinale de l'élément de structure 1. Les barres d'acier 11 à 13 s'étendent ici sur toute la longueur de l'élément de structure 1 selon sa direction longitudinale. Les barres d'acier 11 à 13 peuvent typiquement dépasser de la matrice 10 aux extrémités longitudinales de l'élément de structure, pour permettre l'application d'une contrainte en traction (contrainte en traction dans le toron acier pendant le coulage pour induire une précontrainte (par pré tension) en compression dans le béton lorsque l'acier est détendu) durant le procédé de fabrication. Les barres d'acier 11 à 13 peuvent constituer un ferraillage ou un treillis d'acier. La ou les barres d'acier 11 à 13 présentent avantageusement un diamètre compris entre 5 et 50 mm. Un tel ferraillage ou treillis d'acier ne constitue pas en soi une poutre, mais une structure de renfort connue en soi pour la matrice de béton formant l'essentiel de la poutre ou élément de structure 1. Un tel ferraillage suit les déformations du béton dans lequel il est noyé, l'association des barres d'acier du ferraillage ne formant pas en soi une poutre.

L'élément de structure 1 repose ici sur deux appuis 91 et 92, positionnés à ses extrémités longitudinales. L'élément de structure 1 est ici soumis à une flexion par son poids propre, autour d'un axe perpendiculaire à cette direction longitudinale. L'élément de structure 1 présente ainsi une déformée par rapport à sa direction longitudinale.

L'élément de structure 1 comprend en outre plusieurs capteurs d'attitude distants l'un de l'autre selon sa direction longitudinale. L'attitude d'un capteur est définie par la rotation qui permet de passer du système d'axe du capteur à un système d'axe de référence. L'attitude peut être paramétrée par trois angles : l'inclinaison, le roulis et l'azimut. Il existe plusieurs façons de définir ces trois angles. Lorsqu'un capteur est intégré dans un élément de structure en béton de sorte qu'un de ses axes soit tangent à la fibre (virtuelle), ou autrement dit à la direction longitudinale de l'élément de structure, sur laquelle le réseau de capteurs est positionné, alors :

- l'inclinaison du capteur correspond alors à l'angle de la tangente de la fibre au point de mesure par rapport à un axe d'un référentiel fixe (par exemple l'axe dirigé par la gravité) ;
- Le roulis correspond à l'angle de la rotation autour de l'axe dirigé par la tangente de la fibre au point de mesure ;
- L'azimut correspond à l'angle de la rotation autour de l'axe dirigé par l'axe du référentiel fixe à partir duquel l'inclinaison est définie.

L'élément de structure 1 comprend ici trois capteurs d'attitude 21, 22 et 23 répartis sur sa longueur. Les capteurs d'attitude 21 à 23 sont noyés dans la matrice de béton 10, ce qui permet à la fois de les protéger et de lier leur attitude à la déformée de l'élément de structure 1, plutôt que d'extrapoler la déformée de l'élément de structure depuis l'extérieur. Par ailleurs, du fait de leur noyage dans la matrice de béton 10, toute la surface développée de ces capteurs 21 à 23 est sollicitée par les déformations de cette matrice 10. La fidélité de la réponse de ces capteurs 21 à 23 est ainsi accrue. Les capteurs d'attitude 21 à 23 sont en outre fixés (par exemple par soudure) en position à partir de la structure de renfort. Ainsi, leurs positions longitudinales respectives par rapport à l'élément de structure 1 peuvent être définies avec précision.

Dans cet exemple, les capteurs d'attitude sont fixés ou bloqués en position à la barre d'acier 12. La barre d'acier 12 est en l'occurrence positionnée au niveau de la fibre neutre de l'élément de structure 1. En théorie des poutres, la fibre neutre désigne une courbe passant par le centre de gravité des sections droites de l'élément de structure 1. Lorsqu'on est dans le domaine des petites déformations, la longueur de cette fibre neutre ne varie pas en flexion. Une déformée calculée pour l'élément de structure 1 à partir de mesures d'attitude au niveau de la fibre neutre est donc particulièrement précise. L'instrumentation avec les capteurs d'attitude 21 à 23 selon l'invention est typiquement destinée à détecter une déformation de 1mm sur 10 mètres de longueur de l'élément de structure 1 selon les axes x, y et z. Du fait de leur fixation à la barre d'acier 12, les capteurs d'attitude 21 à 23 sont ainsi avantageusement positionnés au niveau de la fibre neutre de l'élément de structure 1. Si les capteurs d'attitude 21 à 23 ne sont pas positionnés rigoureusement au niveau de la fibre neutre de l'élément de structure 1, ils sont avantageusement positionnés à une distance au plus égale à 150 mm de la fibre neutre de cet élément de structure. Les capteurs d'attitude peuvent également être avantageusement positionnés à une distance de la fibre neutre de l'élément de structure 1 au plus égale à 40% de la distance fibre neutre/surface de l'élément de structure 1. Dans une telle configuration, les capteurs d'attitude 21 à 23 sont en outre davantage protégés des agressions et perturbations extérieures grâce à l'enrobage du béton.

Les capteurs d'attitude 21 à 23 comprennent par exemple chacun un accéléromètre configuré pour mesurer au moins une composante d'accélération selon la direction longitudinale de l'élément de structure 1, et un circuit de calcul configuré pour calculer l'attitude du capteur en fonction de la mesure de son accéléromètre, de façon connue en soi.

Les accéléromètres des capteurs 21 à 23 sont par exemple formés de composants MEMS. De tels capteurs MEMS ont démontré leur stabilité en température et dans le temps, et peuvent actuellement présenter des résolutions de l'ordre de 0,1 mg. De tels capteurs MEMS sont de type inertiel et satisfont à la mesure d'inclinaison/attitude lorsque la charge appliquée sur l'élément de structure 1 est statique.

Les capteurs d'attitude 21 à 23 communiquent avec un circuit de traitement 3. La communication entre les capteurs d'attitude 21 à 23 et le circuit de traitement 3 est par exemple réalisée par l'intermédiaire d'un câble ou faisceau électrique 200. Comme détaillé par la suite, le circuit de traitement 3 récupère les mesures d'attitude fournies par chaque capteur d'attitude 21 à 23 et calcule une déformée de l'élément de structure 1 en fonction de ces mesures d'attitude.

La déformée calculée peut être utile pour déterminer l'état de santé d'une structure incluant l'élément de structure. Par exemple, si la déformée de l'élément de structure 1 calculée par le circuit de traitement 3 diffère de façon importante de la déformée simulée lors de la conception, une anomalie de conception, de fabrication ou d'installation, peut être détectée et corrigée. La déformée calculée permet notamment de déterminer si des paramètres mécaniques structurels (par exemple le module d'Young, le coefficient de Poisson, la vitesse de propagation des ondes élastiques) sont dans une gamme qui garantit encore la poursuite de l'utilisation de l'élément de structure 1.

Les capteurs d'attitude 21 à 23 à accéléromètre peuvent également avantageusement être utilisés pour effectuer des mesures vibratoires.

Pour un élément de structure 1 rectiligne de 30 m en béton, on peut par exemple envisager de répartir, au moins 2 capteurs et de préférence 7 capteurs d'attitude sur la longueur de cet élément de structure, afin de bénéficier d'une bonne précision de calcul de sa déformée.

Chaque capteur d'attitude 21 à 23 comprendra avantageusement un accéléromètre à trois axes. Chaque capteur d'attitude peut également comprendre un capteur de température et/ou un magnétomètre multi axes.

Les figures 2 à 5 illustrent plus précisément un exemple de structure d'un capteur d'attitude 20. Le capteur d'attitude 20 comporte une plaque de circuit imprimé 230. La plaque de circuit imprimé 230 supporte un accéléromètre 231 et un circuit de calcul 232, illustrés schématiquement. Le circuit imprimé 230 forme une interconnexion électrique entre l'accéléromètre 231 et le circuit de calcul 232. Le circuit de calcul 232 calcule de façon connue en soi l'attitude du capteur 20 en fonction des mesures réalisées par l'accéléromètre 231.

Le capteur d'attitude 20 comporte une coque 220 de protection du circuit imprimé 230, de l'accéléromètre 231 et du circuit de calcul 232. La coque 220 présente une forme allongée selon une direction longitudinale, correspondant à la direction longitudinale de l'élément de structure 1 ou d'une barre d'acier à laquelle le capteur 20 doit être fixé. Des câbles électriques 201 et 202 pénètrent dans la coque 220 à des extrémités longitudinales opposées. Les câbles électriques 201 et 202 comprennent par exemple des fils de communication connectés au circuit de calcul 232, des fils d'alimentation du circuit de calcul 232 et de l'accéléromètre 231, et des fils de communication et/ou d'alimentation destinés à un autre capteur d'attitude. La coque 220 comprend ici un matériau enrobant le circuit imprimé 230, l'accéléromètre 231 et le circuit de calcul 232. Le matériau enrobant est par exemple du polyuréthane ou de l'epoxy, qui protège des agressions chimiques, physico-chimiques, qui favorise l'absorption d'éventuels chocs et contraintes durant la coulée du béton, et qui présente une adhérence optimale avec le béton de l'élément de structure pour favoriser un couplage mécanique intime avec celui-ci. La qualité du couplage mécanique entre un capteur d'attitude et le béton permet d'améliorer la précision de la mesure d'attitude sur l'élément de structure. La coque 220 peut par exemple être moulée autour du circuit imprimé 230, de l'accéléromètre 231 et du circuit de calcul 232. La coque 220 peut par exemple être moulée sur une épaisseur d'au moins 15 mm sur ces éléments.

Avantageusement, la coque 220 comporte des excroissances garantissant la stabilité de la position et de l'attitude du capteur 20 lors du retrait du béton, ainsi que son couplage mécanique au béton. De telles excroissances permettent également d'éviter de former des vides dans le béton lors de son retrait. Dans l'exemple illustré, des excroissances 223 et 224 sont formées dans la coque 220. Ces excroissances 223 et 224 sont décalées longitudinalement. Ces excroissances 223 et 224 présentent chacune une forme annulaire, perpendiculaire à la direction longitudinale du capteur 20. Les excroissances 223 et 224 sont par exemple en saillie radialement sur au moins 15 mm, de préférence au moins 20 mm par rapport au reste de la coque 220.

Le capteur 20 comporte des plaques 211 et 212, positionnées perpendiculairement à sa direction longitudinale.

Les plaques 211 et 212 sont destinées à assurer la fixation du capteur 20 sur une barre d'acier de la structure de renfort, d'une part pour maintenir sa position longitudinale par rapport à la barre d'acier et maintenir son attitude par rapport à cette barre d'acier, même lors des étapes de coulée de béton. Les plaques 211 et 212 sont avantageusement en métal, afin de présenter une rigidité suffisante de la fixation du capteur 20 avec une barre d'acier. Les plaques 211 et 212 sont avantageusement relativement distantes, afin d'améliorer le positionnement du capteur 20 par rapport à une barre d'acier. La distance entre les plaques 211 et 212 est par exemple au moins égale à 250 mm. L'accéléromètre 231 est avantageusement positionné entre les plaques 211 et 212. Pour permettre la fixation des plaques 211 et 212 sur une barre d'acier, les plaques 211 et 212 comportent avantageusement des orifices traversants respectifs 213 et 214. Les orifices 213 et 214 sont alignés longitudinalement.

La coque 220 est ici surmoulée sur les arrivées des câbles 201 et 202 et permet d'assurer une reprise mécanique des efforts exercés par les câbles 201 et 202. La coque 220 est ici surmoulée sur une partie des plaques 211 et 212, afin d'assurer une liaison mécanique entre le circuit imprimé 230 et ces plaques 211 et 212.

Le circuit de traitement 3 est configuré pour récupérer les mesures d'attitude des différents capteurs d'attitude 21 à 23. Le circuit de traitement 3 est configuré pour calculer la déformée globale ou la courbure de l'élément de structure 1, en fonction des différentes mesures d'attitude récupérées.

Lors de la déformation de l'élément de structure 1 en flexion, l'attitude des différents capteurs 21 à 23 est modifiée, du fait de leur couplage mécanique avec le béton de l'élément de structure. Le circuit de traitement 3 est programmé pour évaluer l'attitude en tout point de l'élément de structure, à partir des mesures fournies par les capteurs 21 à 23. Une telle évaluation est par exemple réalisée au moyen de méthodes d'interpolation, telles que l'interpolation par splines cubiques. Des exemples de méthodes d'interpolation et de reconstruction sont par exemple décrits dans le chapitre 1 de la thèse de doctorat de N. Sprynski, « Reconstruction de courbes et surfaces à partir de données tangentielles », Université Joseph Fourier, Grenoble, France, 2007.

De même, lors de la déformation de l'élément de structure 1 en torsion, l'attitude des différents capteurs 21 à 23 est modifiée, du fait de leur couplage mécanique avec le béton de l'élément de structure.

Un exemple pour calculer la déformée de l'élément de structure 1 à partir des mesures d'attitude/inclinaison des différents capteurs d'attitude peut être le suivant. On suppose que les capteurs d'attitude 21 à 23 sont des capteurs 3 axes, effectuant une mesure m(t,s) exprimée en g, avec t l'instant de mesure et s l'abscisse curviligne d'un capteur le long de l'élément de structure 1. Avec $\varphi(t,s)$ l'inclinaison et $\eta(t,s)$ son roulis introduit plus haut :

$$m(t,s) = \begin{bmatrix} \cos(\varphi(t,s)) \\ -\sin(\varphi(t,s)) * \sin(\eta(t,s)) \\ -\sin(\varphi(t,s)) * \cos(\eta(t,s)) \end{bmatrix}$$

Les capteurs d'attitude à accéléromètres à 3 axes dans l'élément de structure 1, fournissent un échantillonnage spatial de l'inclinaison/attitude sur toute la longueur pourvue de ces capteurs, en fonction de l'abscisse curviligne le long de cet élément de structure 1. En utilisant un modèle d'interpolation ou d'approximation à partir des attitudes discrètes fournies par les capteurs d'attitude 21 à 23, on peut extrapoler une fonction continue représentative de l'inclinaison/attitude en fonction de l'abscisse curviligne s le long de l'élément de structure 1. La déformée verticale de l'élément de structure 1 en tout point est définie en utilisant cette fonction dans la relation suivante :

$$Def(t,s) = \begin{bmatrix} X(t,s) \\ Y(t,s) \end{bmatrix} = Def(t,s0) + \int_{u=s0}^{s} \begin{bmatrix} \cos(\varphi(t,u)) \\ \sin(\varphi(t,u)) \end{bmatrix} du$$

Dans le repère $(O, \vec{X}, \vec{Y})$ où $\vec{Y}$ est colinéaire à la gravité et $\vec{X}$ est colinéaire à la fibre neutre.

En partant de l'hypothèse que le point d'abscisse curviligne s0 reste fixe dans le temps (encastrement de l'élément de structure 1 à l'abscisse s0 par exemple), alors Def(t,s0)=0. La déformée globale est alors complètement déterminée par l'intermédiaire de la fonction continue d'inclinaison.

La précision du calcul de la déformée globale de l'élément de structure 1 dépend notamment des paramètres suivants du capteur d'attitude :

- sa technologie, influant sur les paramètres suivants : sa résolution (plus petite accélération qui puisse être détectée) du capteur d'attitude, son écart-type de bruit de mesure (lié à la résolution dans certaines technologies), de sa stabilité en température (dérive en mg/°K) et de sa stabilité dans le temps (dérive en mg/an). La notion de stabilité dans le temps intègre les dérives de sensibilité et de calibrage du capteur mais également les dérives des angles entre chaque axe de mesure pour un accéléromètre à 3 axes lorsqu'il est composé de 3 accéléromètres monoaxes perpendiculaires ;

- la densité et la répartition spatiale des capteurs d'attitude le long de l'élément de structure 1. La reconstruction est d'autant plus précise que le nombre de noeuds de mesure est élevé et que leur répartition est adéquate. Pour un élément de structure 1 de structure géométrique sensiblement homogène sur sa longueur, une répartition des capteurs d'attitude uniforme selon la direction longitudinale est optimale. Pour une telle structure, avec les capteurs d'attitude testés, une quantité de 1 capteur d'attitude par 10 mètres de longueur s'avère suffisante, et un capteur tous les mètres est optimal ;

- les incertitudes sur le montage des capteurs d'attitude. Un accéléromètre 3 axes permet d'estimer l'inclinaison que son propre repère forme avec la direction d'orientation de l'élément de structure 1. La déformée globale calculée est d'autant plus précise que l'axe du repère qui définit l'inclinaison de chaque accéléromètre d'un capteur d'attitude est tangent à la déformée globale à calculer. Par calibration du système de capteurs d'attitude, on détermine l'angle définissant l'écart entre l'axe de l'accéléromètre et la tangente à la déformée globale à calculer. La calibration est réalisée par rapport à une référence, ici une information sur l'inclinaison/attitude théorique en chaque point de mesure d'un capteur d'attitude, d'un modèle ou d'une expertise. Après coulée et durcissement du béton, un élément de structure selon l'invention est typiquement positionné avec sa direction longitudinale parallèle à l'horizontale, placée en appui sur une surface plane. Une calibration de chaque capteur d'attitude est alors effectuée par rapport à cette inclinaison théorique maitrisée ;

- les incertitudes sur les abscisses curvilignes des capteurs d'attitude. L'incertitude sur l'abscisse d'un capteur d'attitude influe sur la performance de reconstruction. Les abscisses curvilignes sont déterminées avant la coulée du béton, par exemple par mesure ou par fixation en des abscisses bien prédéfinies par des butées ;

- le modèle d'interpolation/d'approximation de la fonction continue d'inclinaison/attitude. Pour un élément de structure 1 dont la fibre neutre est sensiblement rectiligne, la fonction d'inclinaison est lisse et peut être approximée par l'intermédiaire d'un polynôme de degré réduit, par exemple de degré 3. D'autres modèles d'interpolation sont connus en soi de l'homme du métier pour définir une fonction d'inclinaison à partir de mesures ponctuelles.

Dans l'exemple, on a illustré une application à un élément de structure rectiligne 1. L'invention s'applique bien entendu à des éléments de structure en béton non rectilignes ou inclus dans une structure de géométrie complexe.

L'invention s'applique également à plusieurs produits instrumentés dans un même ouvrage, permettant d'extrapoler une déformée surfacique/volumique par interpolation de déformées linéaires discrétisées dans l'espace.

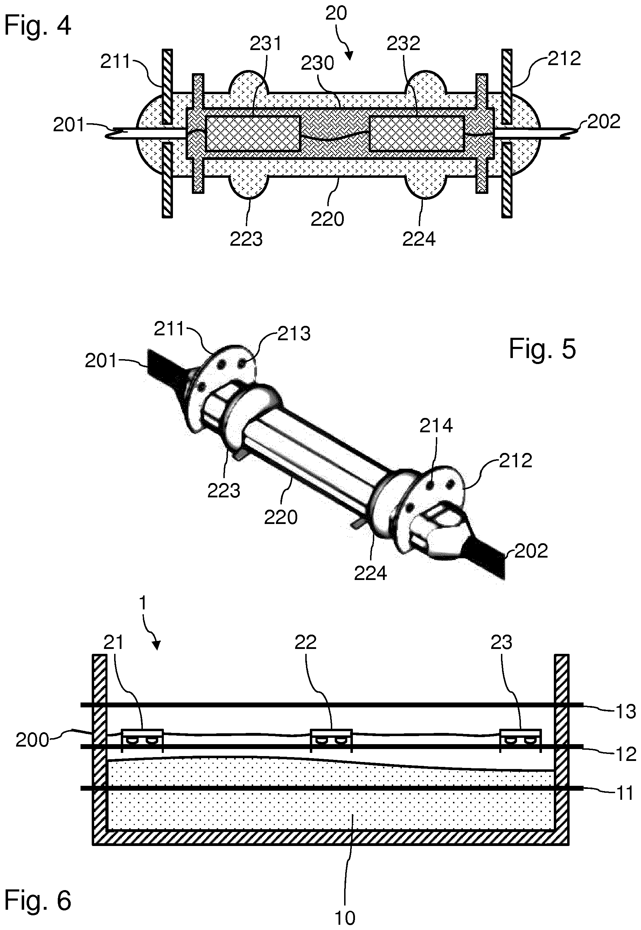

La figure 6 est une vue en coupe schématique de côté d'un élément de structure 1 au cours d'une étape d'un exemple de procédé de fabrication. Dans cet exemple, on a fourni un moule 3, destinés à définir la forme de l'élément de structure 1. Une structure de renfort en acier comprenant par exemple des barres d'acier 11,12 et 13 est supportée par le moule 3. Les barres d'acier 11 à 13 s'étendent ici selon une direction longitudinale de l'élément de structure 1 à former. Les barres d'acier 11 à 13 peuvent être reliées entre elles de façon connue en soi par d'autres barres d'acier transversales de façon à former un treillis. Des capteurs d'attitudes 21 à 23 ont été au préalable fixés ou positionnés à partir de à la barre d'acier 12. Les capteurs d'attitudes 21 à 23 sont distants les uns des autres selon la direction longitudinale de l'élément de structure 1 à former. Les capteurs d'attitudes 21 à 23 sont répartis selon cette direction longitudinale. Les capteurs d'attitude 21 à 23 sont ici fixés sur une barre d'acier 12 positionnée au niveau de la fibre neutre de l'élément de structure 1 à former. Le positionnement longitudinal des différents capteurs d'attitudes 21 à 23 peut être soit mesuré postérieurement à leur fixation sur la barre d'acier 12, ou alors ces capteurs d'attitudes 21 à 23 peuvent être fixés en des emplacements référencés au préalable le long de la barre d'acier 12.

Les capteurs d'attitudes 21 à 23 sont ici raccordés par un câble ou faisceau électrique 200, dépassant du moule 3. Le câble 200 sera ainsi à la fois connecté aux capteurs d'attitude 21 à 23 et accessible depuis l'extérieur, après coulée de la matrice de béton. Le câble 200 est destiné à permettre une communication entre les capteurs d'attitudes 21 à 23 et le circuit de traitement extérieur 3 et/ou une alimentation électrique des capteurs d'attitudes 21 à 23. Le câble 200 peut typiquement longer la barre d'acier 12.

Les barres d'acier 11 à 13 peuvent être au préalable soumises à une contrainte en traction, maintenue jusqu'au durcissement du béton, de façon à former un élément de structure 1 en béton précontraint. L'application d'une contrainte en traction sur la barre d'acier 12 peut être réalisée préalablement à la fixation des capteurs d'attitudes 21 à 23 sur cette barre d'acier. À la figure 6, une matrice en béton 10 est en cours de coulée à l'intérieur du moule 3, de façon à noyer les barres d'acier 11 à 13. La matrice en béton 10 peut par exemple être coulée par gravité. Afin de faciliter l'évacuation de l'air contenu dans la matrice de béton 10 en vue de la densifier, le moule 3 peut être mis en vibration. À l'issue de la coulée de la matrice de béton 10, le moule 3 peut être disposé dans une étuve afin d'accélérer le durcissement de la matrice de béton 10. Une étape d'usage d'une durée pouvant atteindre 24 heures à une température de chauffe allant jusqu'à 60° peut par exemple être mis en oeuvre.

Le processus de fabrication de l'élément de structure 1 peut ensuite être poursuivi par un retrait du moule 3.

Antérieurement ou postérieurement au retrait du moule 3, on met en oeuvre une étape de calibration de l'élément de structure 1. Par un relevé des attitudes mesurées par les capteurs 21 à 23, on peut calibrer l'élément de structure 1 pour tenir compte de l'incidence du procédé de fabrication sur l'attitude (en inclinaison et en roulis) des capteurs 21 à 23, par exemple du fait de la coulée de la matrice de béton 10 ou de la vibration du moule 3. Les attitudes des capteurs 21 à 23 sont ainsi mesurées pour une configuration nominale de l'élément de structure. La déformée de l'élément de structure 1 par rapport à cette position nominale pourra ainsi être calculée précisément.

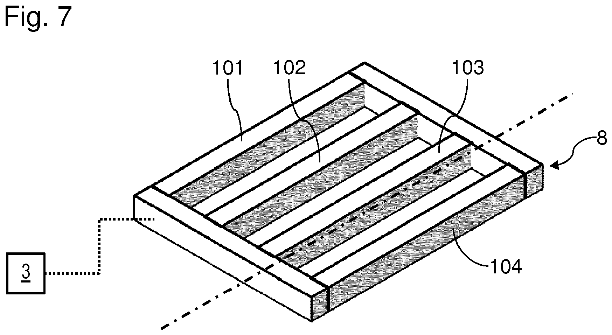

La figure 7 est une vue en perspective d'un exemple de structure 8, comprenant plusieurs éléments de structure 101 à 104 tels que détaillées précédemment. Les éléments de structure 101 à 104 sont ici rectilignes et s'étendent selon une même direction. Le circuit de traitement 3 est ici configuré pour calculer une déformée globale de la structure 8, à partir du calcul de la déformée de chacune des éléments de structure 101 à 104.

**Revendications**

1.  Elément de structure béton (1), comprenant :

    - une matrice en béton (10) ;
    - une structure de renfort en acier (11, 12, 13) noyée dans ladite matrice (10) ;
    - au moins des premier et deuxième capteurs d'attitude (21,22) distants l'un de l'autre selon une direction, fixés sur ladite structure de renfort ;
    - un circuit de traitement (3) configuré pour récupérer des mesures d'attitude fournies par chaque capteur d'attitude (21, 22) et configuré pour calculer une déformée dudit élément de structure par rapport à ladite direction en fonction des mesures d'attitude récupérées ;

    **Caractérisé en ce que** les premier et deuxième capteurs d'attitude (21, 22) sont noyés dans ladite matrice.

2.  Elément de structure (1) selon la revendication 1, dans lequel ladite structure de renfort en acier (11, 12, 13) comprend une barre d'acier (12) sur laquelle les premier et deuxième capteurs d'attitude (21,22) sont positionnés.

3.  Elément de structure (1) selon la revendication 2, dans lequel ladite structure de renfort en acier (11, 12, 13) comprend plusieurs barres d'acier (12) formant un ferraillage ou un treillis métallique.

4.  Elément de structure (1) selon la revendication 3, dans lequel lesdites barres d'acier (12) présentent un diamètre compris entre 5 et 50mm.

5.  Elément de structure (1) selon l'une quelconque des revendications précédentes, dans lequel lesdits premier et deuxième capteurs (21, 22) sont positionnés à une distance de la fibre neutre de l'élément de structure considérée au plus égale à 40% de la distance fibre neutre/surface pour une flexion autour d'un axe perpendiculaire à ladite direction.

6.  Elément de structure (1) selon l'une quelconque des revendications précédentes, dans lequel chacun desdits premier et deuxième capteurs d'attitude (21,22) comprend :

    - un accéléromètre (231) configuré pour mesurer une composante d'accélération selon ladite direction ;
    - un circuit de calcul (232) configuré pour calculer l'attitude du capteur en fonction de la mesure de l'accéléromètre.

7.  Elément de structure (1) selon la revendication 6, dans lequel ledit circuit de calcul (232) est configuré pour effectuer une mesure vibratoire en fonction de la mesure de l'accéléromètre.

8.  Elément de structure (1) selon la revendication 6 ou 7, dans lequel chacun desdits premier et deuxième capteurs d'attitude (21, 22) comprend un support auquel son accéléromètre respectif (231) est fixé, le support comprenant deux plaques (211, 212) perpendiculaires à ladite direction, ledit accéléromètre étant positionné entre ces deux plaques.

9.  Elément de structure selon la revendication 8, dans lequel lesdites plaques comportent chacune un orifice respectif (213, 214) traversé par ladite structure de renfort.

10. Elément de structure selon la revendication 8 ou 9, dans lequel lesdites plaques (211, 212) sont soudées à ladite structure de renfort.

11. Elément de structure (1) selon l'une quelconque des revendications 8 à 10, dans lequel ledit support comporte une coque (220) surmoulée sur ledit accéléromètre (231) et sur ledit circuit de calcul (232).

12. Elément de structure (1) selon la revendication 11, dans lequel ladite coque (220) est en polyuréthane surmoulée sur une épaisseur d'au moins 15mm sur ledit accéléromètre et sur ledit circuit de calcul (232).

13. Elément de structure (1) selon la revendication 11 ou 12, dans lequel ladite coque (220) présente au moins une excroissance (223) en saillie radialement d'au moins 15mm.

14. Elément de structure (1) selon la revendication 13, dans lequel ladite excroissance (223) présente une forme annulaire perpendiculaire à ladite direction.

15. Structure, **caractérisée en ce qu'**elle comprend :

   - plusieurs éléments de structure béton (1) selon l'une quelconque des revendications précédentes ;
   - un circuit de traitement (3) configuré pour calculer une déformée globale à partir de la déformée calculée pour chacun desdits éléments de structure.


**Patentansprüche**

1. Betonstrukturelement (1), aufweisend:

   - eine Matrix aus Beton (10);
   - eine Verstärkungsstruktur aus Stahl (11, 12, 13), die in die Matrix (10) eingebettet ist;
   - mindestens einen ersten und zweiten in einer Richtung voneinander entfernten Lagesensor (21, 22), die an der Verstärkungsstruktur befestigt sind;
   - eine Verarbeitungsschaltung (3), die ausgelegt ist, von jedem Lagesensor (21, 22) gelieferte Lagemessungen zu sammeln, und ausgelegt ist, eine Verformung des Strukturelements in Bezug auf die Richtung in Abhängigkeit der gesammelten Lagemessungen zu berechnen;

   **dadurch gekennzeichnet, dass** der erste und zweite Lagesensor (21, 22) in der Matrix eingebettet sind.

2. Strukturelement (1) nach Anspruch 1, bei dem die Verstärkungsstruktur aus Stahl (11, 12, 13) eine Stahlstange (12) aufweist, an welcher der erste und zweite Lagesensor (21, 22) positioniert sind.

3. Strukturelement (1) nach Anspruch 2, bei dem die Verstärkungsstruktur aus Stahl (11, 12, 13) mehrere Stahlstangen (12) aufweist, die eine Metall-Armierung oder ein - Gitter bilden.

4. Strukturelement (1) nach Anspruch 3, bei dem die Stahlstangen (12) einen Durchmesser von zwischen 5 und 50 mm aufweisen.

5. Strukturelement (1) nach einem der vorhergehenden Ansprüche, bei dem der erste und zweite Sensor (21, 22) in einem Abstand von der neutralen Faser des Strukturelements angeordnet sind, der höchstens 40% des Abstands zwischen der neutralen Faser/Oberfläche beträgt, bei einer Biegung um eine Achse senkrecht zu der Richtung.

6. Strukturelement (1) nach einem der vorhergehenden Ansprüche, bei dem der erste und zweite Lagesensor (21, 22) jeweils aufweist:

   - einen Beschleunigungsmesser (231), der ausgelegt ist, eine Beschleunigungskomponente in der Richtung zu messen;
   - eine Berechnungsschaltung (232), die ausgelegt ist, die Lage des Sensors in Abhängigkeit von der Messung des Beschleunigungsmessers zu berechnen.

7. Strukturelement (1) nach Anspruch 6, bei dem die Berechnungsschaltung (232) ausgelegt ist, eine Schwingungsmessung in Abhängigkeit von der Messung des Beschleunigungsmessers durchzuführen.

**8.** Strukturelement (1) nach Anspruch 6 oder 7, bei dem der erste und zweite Lagesensor (21, 22) jeweils einen Träger aufweisen, an dem sein jeweiliger Beschleunigungsmesser (231) befestigt ist, wobei der Träger zwei Platten (211, 212) senkrecht zu der Richtung aufweist, wobei der Beschleunigungsmesser zwischen diesen beiden Platten positioniert ist.

**9.** Strukturelement nach Anspruch 8, bei dem die Platten jeweils eine jeweilige Öffnung (213, 214) aufweisen, die von der Verstärkungsstruktur durchdrungen wird.

**10.** Strukturelement nach Anspruch 8 oder 9, bei dem die Platten (211, 212) mit der Verstärkungsstruktur verschweißt sind.

**11.** Strukturelement (1) nach einem der Ansprüche 8 bis 10, bei dem der Träger ein über dem Beschleunigungsmesser (231) und der Berechnungsschaltung (232) abgeformtes Gehäuse (220) umfasst.

**12.** Strukturelement (1) nach Anspruch 11, bei dem das Gehäuse (220) aus Polyurethan besteht, das über dem Beschleunigungsmesser und der Berechnungsschaltung (232) in einer Dicke von mindestens 15 mm abgeformt ist.

**13.** Strukturelement (1) nach Anspruch 11 oder 12, bei dem das Gehäuse (220) mindestens eine mindestens 15 mm radial vorspringende Ausstülpung (223) aufweist.

**14.** Strukturelement (1) nach Anspruch 13, bei dem die Ausstülpung (223) eine ringförmige Form senkrecht zu der Richtung aufweist.

**15.** Struktur, **dadurch gekennzeichnet, dass** sie aufweist:

- mehrere Betonstrukturelemente (1) nach einem der vorhergehenden Ansprüche;
- eine Verarbeitungsschaltung (3), die ausgelegt ist, eine Gesamtverformung ausgehend von der für jedes der Strukturelemente berechneten Verformung zu berechnen.


**Claims**

**1.** Concrete structural element (1), comprising:

- a concrete matrix (10);
- a steel reinforcing structure (11, 12, 13) embedded in said matrix (10);
- at least first and second attitude sensors (21, 22) apart from one another in a direction, fixed to said reinforcing structure;
- a processing circuit (3) configured to recover attitude measurements supplied by each attitude sensor (21, 22) and configured to compute a deformation of said structural element relative to said direction as a function of the attitude measurements recovered; **characterized in that** the first and second attitude sensors (21, 22) are embedded in said matrix.

**2.** Structural element (1) according to Claim 1, in which said steel reinforcing structure (11, 12, 13) comprises a steel bar (12) on which the first and second attitude sensors (21, 22) are positioned.

**3.** Structural element (1) according to Claim 2, in which said steel reinforcing structure (11, 12, 13) comprises several steel bars (12) forming a metal reinforcement or lattice.

**4.** Structural element (1) according to Claim 3, in which said steel bars (12) have a diameter of between 5 and 50 mm.

**5.** Structural element (1) according to any one of the preceding claims, in which said first and second sensors (21, 22) are positioned at a distance from the neutral fibre of the structural element concerned at most equal to 40% of the neutral fibre/surface distance for a deflection about an axis perpendicular to said direction.

**6.** Structural element (1) according to any one of the preceding claims, in which each of said first and second attitude sensors (21, 22) comprises:

- an accelerometer (231) configured to measure an acceleration component in said direction;
- a computation circuit (232) configured to compute the attitude of the sensor as a function of the measurement from the accelerometer.

7. Structural element (1) according to Claim 6, in which said computation circuit (232) is configured to perform a vibratory measurement as a function of the measurement from the accelerometer.

8. Structural element (1) according to Claim 6 or 7, in which each of said first and second attitude sensors (21, 22) comprises a support to which its respective accelerometer (231) is fixed, the support comprising two plates (211, 212) perpendicular to said direction, said accelerometer being positioned between these two plates.

9. Structural element according to Claim 8, in which said plates each comprise a respective orifice (213, 214) passed through by said reinforcing structure.

10. Structural element according to Claim 8 or 9, in which said plates (211, 212) are welded to said reinforcing structure.

11. Structural element (1) according to any one of Claims 8 to 10, in which said support comprises a shell (220) overmoulded over said accelerometer (231) and over said computation circuit (232).

12. Structural element (1) according to Claim 11, in which said shell (220) is made of polyurethane overmoulded to a thickness of at least 15 mm over said accelerometer and over said computation circuit (232).

13. Structural element (1) according to Claim 11 or 12, in which said shell (220) has at least one protuberance (223) protruding radially by at least 15 mm.

14. Structural element (1) according to Claim 13, in which said protuberance (223) has an annular form perpendicular to said direction.

15. Structure, **characterized in that** it comprises:

    - several concrete structural elements (1) according to any one of the preceding claims;
    - a processing circuit (3) configured to compute an overall deformation from the deformation computed for each of said structural elements.

Fig. 1

Fig. 2

Fig. 3

Fig. 4

Fig. 5

Fig. 6

Fig. 7

**EP 3 299 762 B1**

**Documents brevets cités dans la description**

- US 20020057097 A

- US 20140012517 A

**Littérature non-brevet citée dans la description**

- **MRS. LOAËC et al.** *Transport Research Arena tenu à Paris,* 2014

- **N. SPRYNSKI.** Reconstruction de courbes et surfaces à partir de données tangentielles. Université Joseph Fourier, 2007